(19) Europäisches Patentamt

European Patent Office

Office européen des brevets

(11) Numéro de publication : **0 335 779 B1**

(12) **FASCICULE DE BREVET EUROPEEN**

(45) Date de publication du fascicule du brevet :
**16.10.91 Bulletin 91/42**

(21) Numéro de dépôt : **89400820.0**

(22) Date de dépôt : **23.03.89**

(51) Int. Cl.⁵ : **F01D 25/16, F02C 7/06, F16C 25/08, F16C 27/04**

(54) **Palier inter-arbres de turbomachine multi-corps muni d'un dispositif de pilotage de jeu.**

(30) Priorité : **30.03.88 FR 8804162**

(43) Date de publication de la demande :
**04.10.89 Bulletin 89/40**

(45) Mention de la délivrance du brevet :
**16.10.91 Bulletin 91/42**

(84) Etats contractants désignés :
**DE FR GB**

(56) Documents cités :
**GB-A- 886 255**
**GB-A- 1 130 279**
**GB-A- 2 183 736**
**US-A- 4 676 667**

(73) Titulaire : **SOCIETE NATIONALE D'ETUDE ET DE CONSTRUCTION DE MOTEURS D'AVIATION, "S.N.E.C.M.A."**
**2, Boulevard du Général Martial Valin**
**F-75015 Paris (FR)**

(72) Inventeur : **Pham, Lucien Paul**
**233, avenue de la Libération**
**F-77350 Le Mée sur Seine (FR)**
Inventeur : **Taillant, Jean-Claude Christian**
**3, rue de Sion**
**F-91000 Evry (FR)**

(74) Mandataire : **Moinat, François et al**
**S.N.E.C.M.A. Service des Brevets Boîte Postale 81**
**F-91003 Evry Cédex (FR)**

## Description

La présente invention concerne un palier inter-arbres de turbomachine multi-corps muni d'un dispositif de pilotage du jeu en fonctionnement.

Certaines turbomachines du type multi-corps comportent un palier qui supporte en rotation un premier arbre par rapport à un second arbre et qui comprend de manière générale un roulement à rouleaux insérés entre une bague extérieure montée sur le premier arbre et une bague intérieure montée sur le second arbre. C'est notamment le cas lorsque le premier arbre placé du côté extérieur est constitué par le tourillon aval de la ligne d'arbre du corps haute-pression et le second arbre placé du côté intérieur est constitué par le tourillon aval de la ligne d'arbre du corps basse-pression. En-dehors des fonctions mécaniques directement recherchées, toutes dispositions sont habituellement prévues, mettant en oeuvre diverses solutions généralement connues, pour assurer le graissage et le refroidissement du roulement. Un exemple en est donné par EP-A 0042320 qui prévoît également l'utilisation d'une pellicule d'huile sous pression pour assurer l'amortissement des vibrations des arbres et du roulement qui apparaissent habituellement en fonctionnement dans les conditions sévères d'utilisation sur les turbomachines à hautes performances. Cependant des jeux importants en fonctionnement peuvent apparaître dans certains paliers inter-arbres, par suite notamment de dilatations différentielles provenant des écarts thermiques et d'écarts dans les forces centrifuges correspondant à des vitesses de rotation différentes. EP-A 0083266 a proposé un élément de solution en améliorant la maîtrise de la température d'un arbre par circulation d'huile dans des canaux longitudinaux ménagés à l'intérieur de l'arbre. On a également tenté un montage du roulement en précontrainte ou l'utilisation d'une frette, par exemple selon USA 4283096.

EP-A 0042320 déjà cité ci-dessus prévoît le montage d'un arbre du corps haute-pression susceptible d'être porté à de plus hautes températures et de tourner à de plus grandes vitesses à l'intérieur de l'arbre du corps basse-pression, ce qui permet de réduire les jeux en fonctionnement. Toutefois ce type de montage n'est pas utilisable dans certaines applications et il implique en outre des difficultés pour cerner l'évolution des jeux en fonctionnement et cette solution, tout comme les solutions avec frettage ou mise en précontrainte, induit des risques d'un serrage en fonctionnement qui est préjudiciable à la durée du roulement. Par suite, en l'absence de solution pleinement satisfaisante, il subsiste sur les paliers inter-arbres, notamment sur turbomachines, des problèmes de vibrations élevées en amplitude et charges liées à l'orbitage du rotor du corps haute-pression dans les jeux du palier, qui peuvent devenir importants en fonctionnement.

Sans encourir les inconvénients des essais de solution précédemment tentés, l'invention vise à obtenir un pilotage en fonctionnement des jeux radiaux susceptibles d'apparaître dans un palier inter-arbres sous l'influence des effets thermiques et mécaniques par effet centrifuge. Ces résultats sont obtenus au moyen d'un palier inter-arbres de turbomachine multi-corps caractérisé en ce que la bague extérieure et le premier arbre comportent chacun au moins une surface conique respectivement coopérante l'une avec l'autre et en ce qu'il comporte en outre une pluralité de masselottes, de forme générale, en section, trapézoïdale, disposées entre l'écrou et la face arrière de ladite bague extérieure, la face arrière inclinée de lesdites masselottes coopérant avec une surface conique de la face amont dudit écrou de telle sorte que, en fonctionnement, le déplacement des masselottes sous l'effet de la force centrifuge induit une poussée axiale sur la bague extérieure dont le déplacement le long des dites surfaces coniques de l'arbre et de la bague tend à resserrer le roulement, de manière à piloter en fonction de la vitesse de rotation le jeu radial susceptible d'apparaître entre les surfaces cylindriques de la bague extérieure et du premier arbre.

D'autres avantages et caractéristiques de l'invention seront mieux compris à la lecture de la description qui va suivre de deux modes de réalisation de l'invention, en référence aux dessins annexés sur lesquels:

— la figure 1 est une vue partielle en coupe axiale d'une turbomachine multi-corps dans la zone d'une palier inter-arbres représentant un premier mode de réalisation dudit palier conforme à l'invention ;

— la figure 2 est une vue partielle en coupe axiale d'une turbomachine multi-corps, analogue à celle de la figure 1, représentant un deuxième mode de réalisation de palier inter-arbres conforme à l'invention.

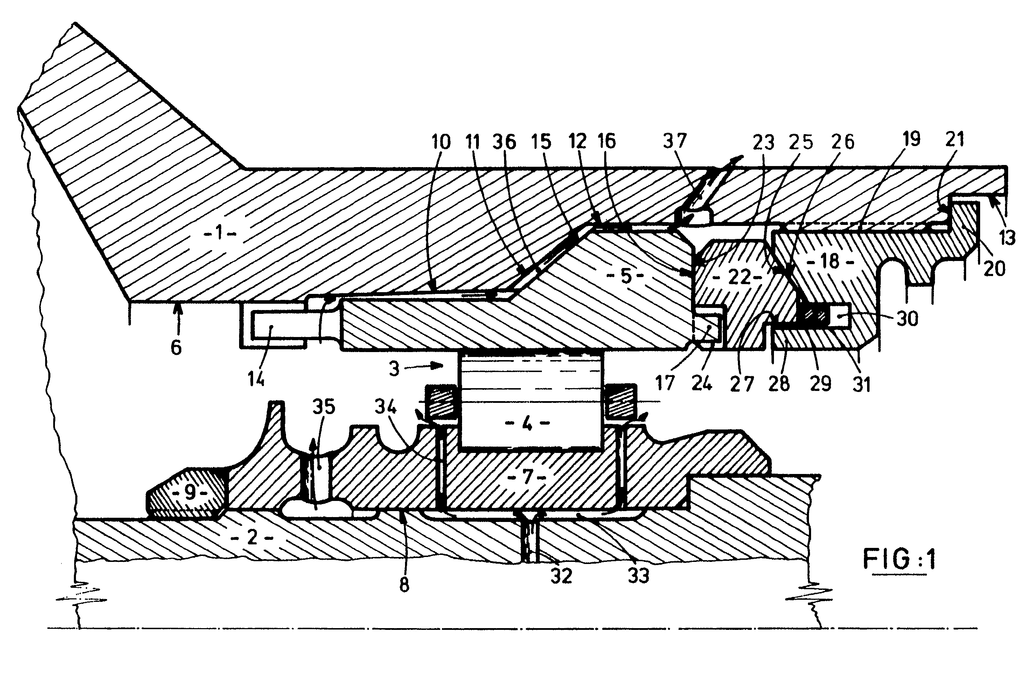

La partie de turbomachine multi-corps, représentée en coupe axiale à la figure 1, comporte un premier arbre 1 qui est le tourillon aval de la ligne d'arbre du corps haute-pression de turbomachine et un second arbre 2, placé à l'intérieur du premier arbre 1 et qui est le tourillon aval de la ligne d'arbre du corps basse-pression de turbomachine. Lesdits arbres 1 et 2 sont supportés en rotation l'un par rapport à l'autre par un roulement 3 dont les rouleaux 4 sont insérés entre une bague extérieure 5 montée directement sur la face interne 6 du premier arbre 1 et une bague intérieure 7 montée sur la face externe 8 du second arbre 2, entre les pistes desquelles ils roulent. Ces éléments constituent un palier inter-arbres de la turbomachine multi-corps. Ladite bague intérieure 7 est maintenue par un écrou de serrage 9 placé du côté amont. Amont et aval seront définis par rapport au sens normal de circulation des gaz de la turbomachine, qui sera également pris de l'avant vers l'arrière.

La face interne 6 du premier arbre 1 comporte, de l'amont vers l'aval, une première surface conique 10, de faible conicité et présentant une légère divergence vers l'arrière, puis, se raccordant à ladite surface 10, une seconde surface conique 11 dont la divergence orientée vers l'arrière présente un angle de conicité voisin de 40 degrés par rapport à l'axe de la turbomachine et enfin deux dégagements cylindriques successifs, respectivement 12 et 13. La bague extérieure 5 comporte, à l'amont, des doigts avant 14 qui assurent un appui tangentiel de la bague 5 sur le premier arbre 1 et bloquent également en rotation ladite bague 5 par rapport à l'arbre 1. La bague 5 comporte, au niveau de la seconde surface conique 11 du premier arbre 1, une surface conique 15 coopérante. La face plane, aval, radiale 16, perpendiculaire à l'axe de la turbomachine, de la bague extérieure 5 porte, du côté radialement interne, des doigts arrière 17. Un écrou de maintien 18 est vissé sur une partie aval filetée 19 du dégagement cylindrique 12 de la face interne 6 du premier arbre 1 et comporte une collerette 20 qui vient en appui, au serrage, sur la face radiale 21 du dégagement cylindrique 13 de l'arbre 1. Entre ladite bague extérieure 5 et ledit écrou 18, sont placés une pluralité de masselottes 22 dont la face amont 23 coopère avec la face aval 16 de la bague extérieure 5. Ladite face amont 23 de masselotte comporte une encoche 24 pour le logement des doigts arrière 17 de la bague 5 qui assurent l'anti-rotation des masselottes 22. Côté aval, chaque masselotte 22 comporte une face inclinée 25 qui coopère avec une surface conique 26 ménagée du côté amont de l'écrou 18. Du même côté aval et du côté radialement interne de chaque masselotte 22, est ménagé un dégagement cylindrique 27 où se place une avancée cylindrique amont 28 de l'écrou 18. Entre lesdits dégagement et avancée cylindriques, respectivement 27 et 28, et lesdites surfaces coniques coopérantes, respectivement 25 et 26, d'une masselotte 22 et de l'écrou 18, sont ménagés, au même niveau radial, sur la masselotte 22, une portée verticale 29 et, sur l'écrou 18, une gorge annulaire 30 dans laquelle est placé un ressort 31. Ce ressort 31, dont la fonction sera précisée plus loin, comporte des ondulations dans la direction axiale qui s'appuient, d'une part, sur ladite portée 29 de masselotte et, d'autre part, au fond de ladite gorge 30 de l'écrou. Des dispositions, telles qu'elles sont couramment pratiquées dans leur principe, sont également prévues pour la circulation d'huile à travers le palier, en vue du graissage du roulement 3 et du refroidissement du palier. Ainsi, le second arbre 2 comporte des canaux tels que 32 d'arrivée d'huile, qui par des rainures longitudinales 33 et des canaux 34 dans la bague intérieure 7 atteint le roulement 3. En outre, par un perçage 35 dans la bague intérieure 7, l'huile atteint à travers les passages entre les doigts avant 14 de la bague extérieure 5, l'espace ménagé entre la face interne 6 du premier arbre 1 et la face externe de la bague 5. Sur la surface conique 11 du premier arbre 1 sont notamment ménagés des canaux 36 de circulation d'huile dont le retour est assuré par un perçage tel que 37 dans le premier arbre 1.

Cette circulation d'huile est symbolisée par des flèches sur la figure 1 des dessins. De même un système connu de ventilation des enceintes continue à être appliqué sans répercussion contradictoire sur les dispositions de l'invention.

Le fonctionnement du dispositif de pilotage des jeux composé des éléments du palier inter-arbres qui vient d'être décrit dans un premier mode de réalisation de l'invention schématiquement représenté à la figure 1 est le suivant. A l'arrêt, les masselottes 22 sont retenues radialement en place par l'avancée cylindrique 28 de l'écrou 18 coopérant avec le dégagement cylindrique 27. En même temps, le contact entre les surfaces coniques coopérantes respectivement 11 du premier arbre 1 et 15 de la bague extérieure 5 est maintenu, à l'arrêt, sous l'effet de la poussée axiale exercée par le ressort 31 par l'intermédiaire des masselottes 22 dont la face amont 23 coopère avec la face aval 16 de la bague extérieure 5.

Lorsque la turbomachine multi-corps fonctionne à haut régime, par suite de la dilatation radiale du premier arbre 1 sous les effets thermiques dus aux élévations de température et sous les effets mécaniques centrifuges dus aux vitesses élevées de rotation, un accroissement du jeu entre le premier arbre 1 et la bague extérieure 5 tend à intervenir. Mais le dispositif de pilotage des jeux conforme à l'invention agit à ce moment. Les forces mécaniques centrifuges dues à la vitesse de rotation s'exercent également sur les masselottes 22 qui tendent à s'écarter radialement vers l'extérieur et en conséquence, à se déplacer suivant le plan incliné offert par la surface 26 de l'écrou 18 et ce faisant, les masselottes 22 prenant réaction sur ledit écrou 18 exercent une poussée axiale sur ladite bague extérieure 5. Ladite bague 5, à son tour, entre en contact avec le premier arbre 1, au niveau des surfaces coniques respectives coopérantes 15 et 11. L'effort axial, au niveau desdites surfaces, développe une composante radiale qui vient plaquer la butée extérieure 5 sur l'arbre 1 et réduit le jeu en annulant l'effet précédent d'accroissement du jeu entre la bague extérieure 5 et le premier arbre 1. Le jeu faible ainsi obtenu en fonctionnement évite les inconvénients résultant des risques d'orbitage de l'arbre entraînant des excentrages et des répercussions sur d'autres paliers ou l'apparition de jeux négatifs en divers points entre rotor et stator de turbomachine ou résultant également de l'apparition de vibrations dont les conséquences sont préjudiciables.

Le choix de la matière des masselottes 22 peut permettre d'adapter aux valeurs souhaitées, en fonction des conditions particulières de l'application concernée, les forces centrifuges obtenues et l'effort axial qui en résulte et s'exerce sur la bague extérieure 5. Des valeurs allant de 3 à 7 tonnes ont ainsi été obtenues dans une application, selon que la matière utilisée est l'acier ou le tungstène.

Une forme sphérique à faible courbure peut être prévue pour la surface inclinée 15 de la bague extérieure 5 afin de compenser une mise en cône du premier arbre 1 en fonctionnement. Les dilatations propres de la bague extérieure 5 dues aux effets centrifuges en fonctionnement peuvent être compensées en prévoyant un pré-serrage correspondant, à froid. On observera également que la réduction des surfaces de contact entre le premier arbre 1 et la bague extérieure 5, au niveau des surfaces 11 et 15, procure l'avantage de réduire les échanges thermiques par conduction entre le premier arbre 1 et ladite bague extérieure 5.

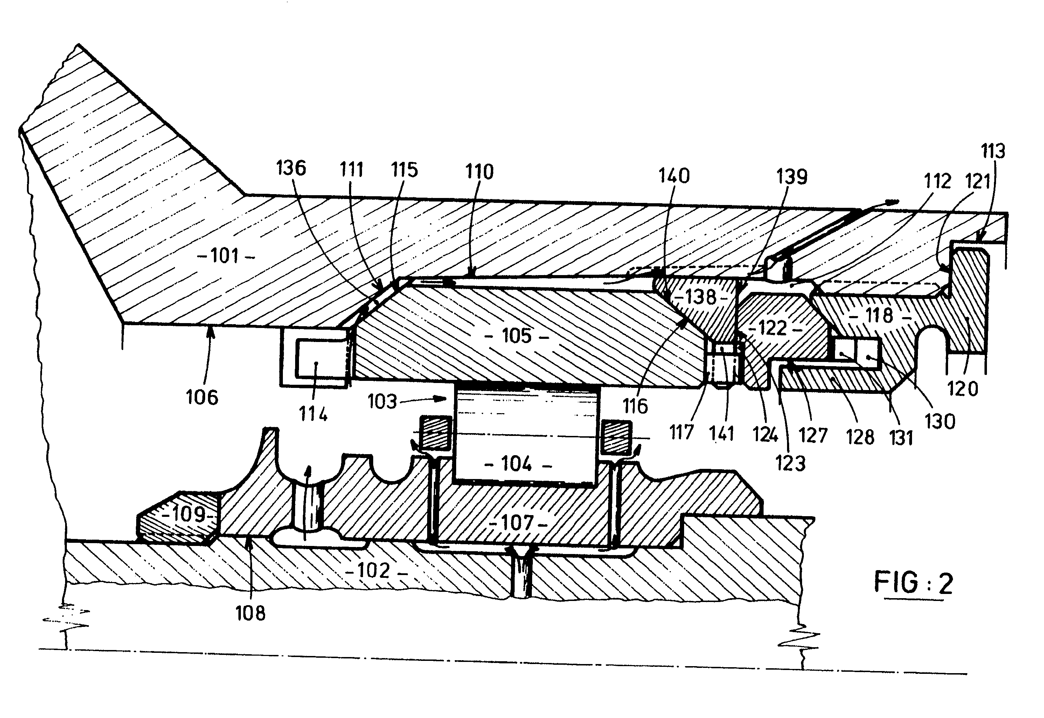

La figure 2 représente un deuxième mode de réalisation d'un palier inter-arbres conforme à l'invention présentant quelques variantes. On donnera aux différents éléments similaires ou analogues dans le deuxième mode le nombre de référence de ces éléments dans le premier mode, augmenté d'une centaine. Comme précédemment, un roulement 103 à rouleaux 104 est monté entre une bague extérieure 105 et une bague intérieure 107 respectivement montées sur un premier arbre 101 et un second arbre 102, au moyen d'écrous, respectivement 118 et 109. Les masselottes 122 sont également conservées.

Par contre, par rapport au premier mode de réalisation représenté à la figure 1, les surfaces coniques 111 et 110 aménagées sur la face interne 106 du premier arbre 101 sont inversées, la surface 111 placée en amont, coopérant avec une surface conique 115 qui devient une face amont de la bague extérieure 105. Comme précédemment, des canaux 136 sont ménagés sur la surface conique 111 du premier arbre 101. Les dégagements cylindriques 112 et 113 de la face interne 106 du premier arbre 101 sont conservés. En outre, entre la face aval 116, qui devient inclinée, de la bague extérieure 105 et la face amont 123 des masselottes 122, sont intercalées des cales sectorisées 138 dont la face plane, aval, radiale 139 coopère avec la face amont 123 d'une masselotte 122 et dont la face amont, inclinée 140 coopère avec la face aval 116 de la bague extérieure 105. Les doigts arrière 117 de la bague extérieure 105 coopèrent, en plus des encoches 124 de masselottes avec des encoches 141 ménagées du côté interne desdites cales 138, de manière à assurer leur blocage en rotation.

On retrouve également sur l'écrou 118, la collerette aval 120 d'appui sur la face radiale 121 du dégagement aval 113 de la bague extérieure 105 et côté amont, l'avancée cylindrique 128 qui coopère avec le dégagement aval 127 des masselottes 122 ainsi que la gorge annulaire 130 dans laquelle est placé le ressort 131.

Le fonctionnement est pour ce second mode de réalisation identique à celui qui a été précédemment décrit pour le premier mode, en référence à la figure 1, les cales 138 intervenant dans la transmission de la poussée axiale des masselottes 122 sur la bague extérieure 105 pour obtenir, comme précédemment, le pilotage du jeu entre ladite bague extérieure 105 et le premier arbre 101.

## Revendications

1. Palier de turbomachine multi-corps supportant en rotation un premier arbre (1 ; 101) placé du côté extérieur et notamment constitué par le tourillon aval de la ligne d'arbre du corps haute-pression par rapport à un second arbre (2 ; 102) placé du côté intérieur et notamment constitué par le tourillon aval de la ligne d'arbre du corps basse-pression, formant ainsi un palier inter-arbres et comprenant un roulement (3 ; 103) à rouleaux (4 ; 104) insérés entre une bague intérieure (7 ; 107) montée sur la face externe (8 ; 108) du second arbre (2 ; 102) et une bague extérieure (5 ; 105) montée sur la face interne (6 ; 106) du premier arbre (1 ; 101) au moyen d'un écrou (18 ; 118) de maintien, placé à l'arrière, ledit premier arbre (1, 101) et la bague extérieure (5, 105) comportant chacun des surfaces cylindriques faisant face l'une avec l'autre caractérisé en ce que la bague extérieure (5 ; 105) et le premier arbre (1 ; 101) comportent chacun au moins une surface conique (11, 15 ; 111, 115) respectivement coopérantes l'une avec l'autre et en ce qu'il comporte en outre une pluralité de masselottes (22, 122) de forme générale, en section, trapézoïdale, disposées entre ledit écrou (18 ; 118) et la face arrière (16 ; 116) de ladite bague extérieure (5 ; 105), la face arrière inclinée (25) de lesdites masselotte (22 ; 122) coopérant avec une surface conique (26) de la face amont dudit écrou (18 ; 118) de telle sorte que, en fonctionnement, le déplacement des masselottes (22 ; 122) sous l'effet de la force centrifuge induit une poussée axiale sur la bague extérieure (5 ; 105) dont le déplacement le long desdites surfaces coniques de l'arbre (1, 101) et de la bague (5, 105) tend à resserrer le roulement (3 ; 103) de manière à piloter en fonction de la vitesse de rotation le jeu radial susceptible d'apparaître entre les surfaces cylindriques de la bague extérieure (5 ; 105) et du premier arbre (1 ; 101).

2. Palier inter-arbres de turbomachine multi-corps selon la revendication 1 dans lequel le premier arbre (1) comporte sur sa face interne (6), d'avant en arrière, une première surface conique (10) de faible conicité suivie d'une seconde surface conique (11) dont la divergence orientée vers l'arrière présente un angle de conicité voisin de 40 degrés par rapport à l'axe de la turbomachine puis deux dégagements cylindriques successifs (12, 13), la bague extérieure (5) comporte, à l'amont, des doigts avant (14) d'appui sur le premier arbre (1) et d'anti-rotation et, à l'aval, une face plane (16), radiale, perpendiculaire à l'axe de la turbomachine et portant des doigts arrière (17), la face amont (23) desdites masselottes (22) prenant appui sur ladite face radiale aval (16) et comportant des encoches (24) où se logent lesdits doigts arrière (17) de la bague extérieure (5) qui assurent leur anti-rotation, l'écrou (18) comporte sur son diamètre interne, côté amont, une avancée cylindrique (28) qui coopère avec un dégagement aval (27) des masselottes (22) et au-dessus, l'écrou (18) comporte également une gorge annulaire (30) dans laquelle est placée un ressort (31), enfin, côté aval, l'écrou (18) comporte une collerette (20) d'appui sur la face radiale (21) du dégagement aval (13) de la bague extérieure (5).

3. Palier inter-arbres de turbomachine multi-corps selon la revendication 1 dans lequel le premier arbre (101) comporte sur sa face interne (106), d'avant en arrière, une première surface conique (111) dont la divergence orientée vers l'arrière présente un angle de conicité voisin de 40 degrés par rapport à l'axe de la turbomachine, suivie d'une seconde surface conique (110) de faible conicité à laquelle est raccordée une surface cylindrique (112) terminée par un dégagement cylindrique aval (113), la bague extérieure (105) comporte, à l'amont, des doigts avant (114) d'appui sur le premier arbre (101) et d'anti-rotation et à l'aval, une face conique (116) dont la convergence orientée vers l'arrière présente un angle de conicité voisin de 40 degrés par rapport à l'axe de la turbomachine, ladite face conique (116) étant prolongée du côté interne par des doigts arrière (117), la face amont (123) desdites masselottes (122) prenant appui sur des cales sectorisées (138) dont la face opposée inclinée (140) coopère avec ladite face conique aval (116) de la bague extérieure (105), lesdites cales (140) et ladite face amont (123) des masselottes (122) comportant respectivement, du côté interne, des encoches (141, 124) où se logent lesdits doigts arrière (117) de la bague extérieure (105) qui assurent leur anti-rotation, l'écrou (118) comporte sur son diamètre interne, côté amont, une avancée cylindrique (128) qui coopère avec un dégagement aval (127) des masselottes (122) et au-dessus, l'écrou (118) comporte également une gorge annulaire (130) dans laquelle est placée un ressort (131), enfin, côté aval, l'écrou (118) comporte une collerette (120) d'appui sur la face radiale (121) du dégagement aval (113) de la bague extérieure (105).

4. Palier inter-arbres de turbomachine multi-corps selon l'une quelconque des revendications 1 à 3 dans lequel des canaux (36 ; 136) de circulation d'huile et de refroidissement sont ménagés sur ladite surface conique (11 ; 111) du premier arbre (1 ; 101) coopérant avec une surface conique (15 ; 115) de bague extérieure (5 ; 105).

## Patentansprüche

1. Lager für ein Mehrwellen-Strahltriebwerk, in dem eine außenseitig liegende und insbesondere von dem stromabwärtigen Zapfen des Wellenzug des Hochdruckteils gebildete erste Welle (1 ; 101) relativ zu einer innenseitig liegenden und insbesondere von dem stromabwärtigen Zapfen des Wellenzugs des Niederdruckteils gebildeten zweiten Welle (2 ; 102) drehbar gelagert ist, und das somit ein Zwischenwellenlager bildet, wobei dieses Lager ein Rollenlager (3 ; 103) umfaßt, dessen Rollen (4 ; 104) zwischen einem auf der Außenseite (8 ; 108) der zweiten Welle (2 ; 102) montierten Innenring (7 ; 107) und einem Außenring (5 ; 105) eingesetzt sind, mittels einer rückseitig angeordneten Haltemutter (18 ; 118) an der Innenseite (6 ; 106) der ersten Welle (1 ; 101) montierten Außenring (5 ; 105) eingesetzt sind, und wobei sowohl die erste Welle (1 ; 101) als auch der Außenring (5 ; 105) jeweils einander gegenüberliegende Zylinderflächen aufweisen, dadurch gekennzeichnet, daß der Außenring (5 ; 105) und die erste Welle (1 ; 101) jeweils wenigstens eine konische Fläche (11, 15 ; 111, 115) besitzen, die wechselseitig zusammenwirken, und daß weiterhin mehrere Fliehgewichte (22 ; 122) mit allgemein trapezförmigem Querschnitt vorgesehen sind, die zwischen der Haltemutter (18 ; 111) und der rückwärtigen Seite (16 ; 116) des Außenrings (15 ; 115) angeordnet sind, wobei die geneigte rückwärtige Seite (25) der Fliehgewichte (22 ; 122) mit einer konischen Fläche (26) der stromaufwärtigen Seite der Haltemutter (18 ; 118) derart zusammenwirkt, daß die im Betrieb durch die Zentrifugalkraft verursachte Verschiebung der Fliehgewichte (22 ; 122) einen Achsialdruck auf den Außenring (5 ; 105) bewirkt, wobei die Verschiebung des Außenrings längs der genannten konischen Flächen der Welle (1 ; 101) und des Außenrings (5 ; 105) im Sinne eines Nachspannen des Rollenlagers (3 ; 103) wirkt, derart daß das radiale Spiel, das zwischen den Zylinderflächen des Außenrings (5 ; 105) und der ersten Welle (1 ; 101) auftreten kann, in Abhängigkeit von der Drehgeschwindigkeit gesteuert wird.

2. Zwischenwellenlager für ein Mehrwellen-Strahltriebwerk nach Anspruch 1, bei dem die erste Welle (1) auf ihrer Innenseite (6), von vorn nach hinten, eine erste konische Fläche (10) mit geringer Konizität aufweist, gefolgt von einer zweiten konischen Fläche (11), deren nach hinten gerichtete Divergenz gegenüber der Strahltriebwerksachse einen Konizitätswinkel von etwa 40° hat, und weiterhin gefolgt von zwei zylindrischen Freimachungen (12, 13), wobei der Außenring (5) auf der stromaufwärtigen Seite vordere Finger (14) zum Abstützen an der ersten Welle (1) und zur Drehsicherung trägt und auf der stromabwärtigen Seite eine zur Strahltriebwerksachse senkrechte ebene Radialfläche (16) aufweist, die hintere Finger (17) trägt, wobei die stromaufwärtige Seite (23) der Fliehgewichte (22), mit der die sich auf der genannten stromabwärtigen Radialfläche (16) abstützen, Einkerbungen (24) besitzt, in denen die hinteren Finger (17) des Außenrings (5) so aufgenommen sind, daß sie ein Drehen der Fliehgewichte verhindern, wobei die Haltemutter (18) an ihrem stromaufwärts gelegenen Innendurchmesser einen zylindrischem Vorsprung (28) besitzt, der mit einer stromabwärtigen Freimachung (27) der Fliehgewichte (22) zusammenwirkt, wobei die Haltemutter (18) weiterhin eine ringförmige Kehle (30) besitzt, in der eine Feder (31) angeordnet ist, und wobei die Haltemutter (18) schließlich auf ihrer stromaufwärtigen Seite einen Kragen (20) hat, mit dem sie sich an der Radialfläche (21) der stromabwärtigen Freimachung (13) des Außenrings (5) abstützt.

3. Zwischenwellenlager für ein Mehrwellen-Strahltriebwerk nach Anspruch 1, bei dem die erste Welle (101) auf ihrer Innenseite (106), von vorn nach hinten, eine erste konische Fläche (111) aufweist, deren nach hinten gerichtete Divergenz gegenüber der Strahltriebwerksachse einen Konizitätswinkel von etwa 40° besitzt, gefolgt von einer zweiten konischen Fläche (110) mit geringer Konizität, an die sich eine zylindrische Fläche (112) anschließt, die in einer zylindrischen stromabwärtigen Freimachung (113) endet, wobei der Außenring (105) an seiner, stromaufwärtigen Seite vordere Finger (114) zum Abstützen an der ersten Welle (1) und zur Drehsicherung und auf der stromabwärtigen Seite eine konische Fläche (116) aufweist mit einer nach hinten gerichteten Konvergenz mit einem Konizitätswinkel von etwa 40° gegenüber der Strahltriebwerksachse, die auf der Innenseite durch hintere Finger (117) verlängert wird, wobei die Fliehgewichte (120) sich mit ihrer stromaufwärtigen Seite (123) auf Sektorkeilen (138) abstützen, deren gegenüberliegende geneigte Seite (140) mit der stromabwärtigen konischen Fläche (116) des Außenrings (105) zusammenwirkt, wobei diese Keile (14) und die stromaufwärtige Seite (123) der Fliehgewichte (122) auf der Innenseite jeweils Einkerbungen (141, 124) besitzen, in denen die hinteren Finger (117) des Außenrings (105) aufgenommen sind, die ihre Drehsicherung gewährleisten, wobei die Haltemutter (118) weiterhin eine ringförmige Kehle (130) besitzt, in der eine Feder (131) angeordnet ist, und wobei die Haltemutter (18) schließlich auf ihrer stromaufwärtigen Seite einen Kragen (120) hat, mit dem sie sich an der Radialfläche (121) der stromabwärtigen Freimachung (113) des Außenrings (105) abstützt.

4. Zwischenwellenlager für ein Mehrwellen-Strahltriebwerk nach einem der Ansprüche 1 bis 3, bei dem auf der mit einer konischen Fläche (15 ; 115) des Außenrings (5 ; 105) zusammenwirkenden konischen Fläche (11 ; 111) der ersten Welle (1 ; 101) Kanäle (36 ; 136) zur Ölzirkulation und zur Kühlung angebracht sind.

## Claims

1. Bearing for a compound turboshaft engine supporting in rotation a first shaft (1 ; 101) placed on the outside and notably constituted by the downstream journal of the shaft of the high pressure section, in relation to a second shaft (2 ; 102) placed on the inside and notably constituted by the downstream journal of the shaft of the low pressure section, thus forming an inter-shaft bearing and comprising a bearing (3 ; 103) with rollers (4 ; 104) fitted between an inner race (7 ; 107) mounted on the outer face (8 ; 108) of the second shaft (2 ; 102) and an outer race (5 ; 105) mounted on the inner face (6 ; 106) of the first shaft (1 ; 101) by means of a threaded retaining ring (18 ; 118), placed downstream, the said first shaft (1 ; 101) and the outer race (5 ; 105) each comprising cylindrical surfaces facing one another, characterised in that the outer race (5 ; 105) and the first shaft (1 ; 101) each comprise at least one conical surface (11, 15 ; 111, 115) respectively working in conjunction with each other and in that it comprises in addition a plurality of bob weights (22 ; 122) of generally trapezoidal section, arranged between the said retaining ring (18 ; 118) and the downstream face (16 ; 116) of the said outer race (5 ; 105), the downstream inclined face (25) of the said bob weights (22 ; 122) working in conjunction with a conical surface (26) on the upstream face of the said retaining ring (18 ; 118) in such a way that, during running, the movement of the bob weights (22 ; 122) under centrifugal force induces an axial thrust on the outer race (5 ; 105) the movement of which along the conical surfaces of the shaft (1 ; 101) and the outer race (5 ; 105) tends to tighten the bearing (3 ; 103) in such a way as to take up the radial clearance liable, as a function of the speed of rotation, to appear between the cylindrical surfaces of the outer race (5 ; 105) and the first shaft (1 ; 101).

2. Inter-shaft bearing for a compound turboshaft engine in accordance with Claim 1 in which the first shaft (1) comprises on its inner face (6), from front to rear, a first conical surface (10) of small conicity followed by a second conical surface (11) of which the rearwards directed conicity presents an angle of close to 40 degrees in relation to the axis of the turboshaft engine, then two successive cylindrical undercuts (12, 13), the outer race (5) comprises, upstream, front fingers (14) bearing against the first shaft (1) and preventing rotation and, downstream, a flat radial face (16) perpendicular to the axis of the turboshaft engine and carrying rear fingers (17), the upstream face (23) of the said bob weights (22) bearing against the said radial downstream face (16) and comprising notches (24) into which fit the said rear fingers (17) of the outer race (5) which ensure that they do not rotate, the retaining ring (18) comprising on its inner diameter, on the upstream side, a cylindrical tongue (28) which works in conjunction with a downstream undercut (27) on the bob weights (22) and above, the retaining ring (18) also comprises an annular throat (30) in which is placed a spring (31), finally, on the downstream side, the retaining ring (18) comprises a collar (20) bearing against the radial face (21) of the downstream undercut (13) on the outer race (5).

3. Inter-shaft bearing for a compound turboshaft engine in accordance with Claim 1 in which the first shaft (101) comprises on its inner face (106), from front to rear, a first conical surface (111) whose conicity towards the rear presents an angle of about 40 degrees relative to the axis of the turboshaft engine, followed by a second conical surface (110) of low conicity to which is adjoined a cylindrical surface (112) terminated by a downstream cylindrical undercut (113), the outer race (105) comprises, upstream, anti-rotational front fingers (114) bearing against the first shaft (101) and downstream, a conical face (116) whose rearward-facing angle of conicity is about 40 degrees relative to the axis of the turboshaft engine, the said conical face (116) being extended on the inner side by rear fingers (117), the upstream face (123) of the said bob weights (122) bearing against segmented wedges (138) whose opposite inclined face (140) works in conjunction with the said downstream conical face (116) of the outer race (105), the said wedges (140) and the said upstream face (123) of the bob weights (122) comprising respectively, on the inner side, notches (141, 124) into which fit the rear fingers (117) of the outer race (105) which ensure that they do not rotate, the retaining ring (118) comprises around its inner diameter, on the upstream side, a cylindrical tongue (128) which works in conjunction with a downstream undercut (127) in the bob weights (122) and above, the retaining ring (118) also comprises an annular throat (130) in which is placed a spring (131), finally, on the downstream side, the retaining ring (118) comprises a collar (120) bearing against the radial face (121) of the downstream undercut (113) on the outer race (105).

4. Inter-shaft bearing for a compound turboshaft engine in accordance with any one of Claims 1 to 3 in which channels (36 ; 136) for the circulation of oil and for cooling are formed on the said conical surface (11 ; 111) of the first shaft (1 ; 101) working in conjunction with a conical surface (15 ; 115) of the outer race (5 ; 105).

FIG:1

FIG : 2

EP 0 335 779 B1